# FASCICULE DE BREVET EUROPEEN

(11) **EP 1 746 780 B1**
(45) Date de publication et mention de la délivrance du brevet: **28.10.2009**
(21) Numéro de dépôt: 06291175.5
(22) Date de dépôt: 18.07.2006
(51) Int. Cl.: H04L 12/28

(54) **Architecture d'une passerelle domestique configurable**
Architektur eines konfigurierbaren Heimnetzwerksgateway
Configurable home gateway architecture

(30) Priorité: 18.07.2005 FR 0507632
(43) Date de publication de la demande: 24.01.2007
(73) Titulaire: SAGEM COMMUNICATIONS, 92848 Rueil Malmaison Cedex (FR)
(72) Inventeur: Hervo, Vincent, 92100 Boulogne Billancourt (FR); Dalle, Eric, 92370 Chaville (FR)
(74) Mandataire: Maillet, Alain

(56) Documents cités:
- WO-A-01/71977
- WO-A-02/37217
- US-A1- 2003 041 137
- US-A1- 2004 047 358
- US-A1- 2005 144 262
- US-B1- 6 711 138

## Description

La présente invention concerne un procédé de configuration de liaisons internes d'une passerelle domestique destinées à diffuser des services vers des équipements domestiques acheminés jusqu'à ladite passerelle domestique au travers d'un réseau de communication. La présente invention concerne également une passerelle domestique mettant en oeuvre ledit procédé.

Une passerelle domestique est un dispositif qui permet de distribuer des services fournis par un opérateur ou un fournisseur de services au travers d'un réseau de communication, tel que le réseau Internet, vers des équipements domestiques adaptés à présenter ces services à un usager. Une passerelle de ce type est connue de WO 01 71977.

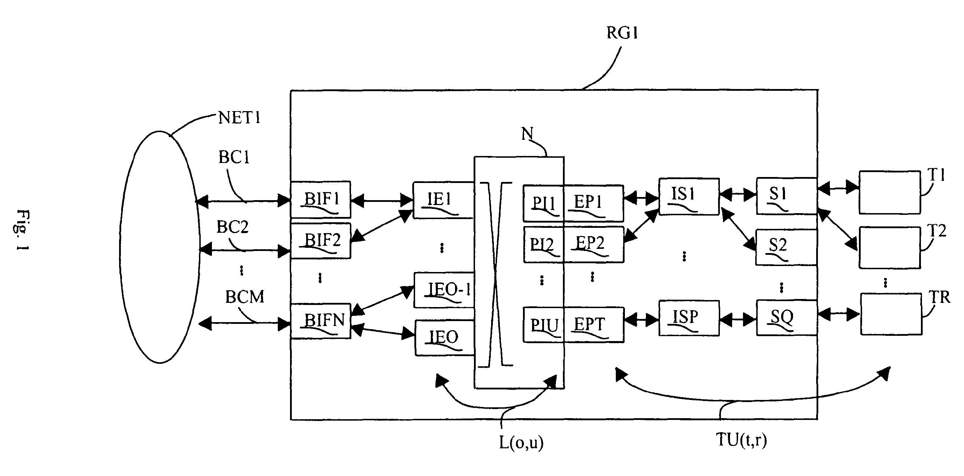

La Fig. 1 représente un schéma synoptique d'un exemple d'architecture interne d'une passerelle domestique RG1 selon l'état de la technique. La passerelle domestique RG1 est connectée à un réseau de communication NET1 par l'intermédiaire de connexions large bande BCₘ (m=1,,...,M). Chacune de ces connexions aboutit à un port d'entrée BIFₙ (n=1,...,N) de la passerelle domestique RG1. Par exemple, la connexion BC1 est une connexion par GigaBits Ethernet, la connexion BC2 est une connexion ADSL de 20 Mbits/s et la connexion BC_{M} est une connexion WiMax. Ces connexions étant de nature différente, la passerelle domestique RG1 comporte des interfaces réseau IEₒ (o=1,...,O) appropriées qui permettent à la passerelle de pouvoir recevoir et envoyer des données via les connexions BCₘ. Chaque port d'entrée BIFₙ est associé à au moins une interface réseaux IEₒ. Selon l'exemple de la Fig. 1, le port d'entrée BIFN est relié aux interfaces réseaux IEₒ₋₁ et IEₒ qui sont chacune dédiées à un circuit virtuel (Virtual Circuit) ATM acheminé via la connexion BCM. De plus, plusieurs ports d'entrée BIFₙ peuvent également être reliés à une même interface réseau IEₒ dans le cas où les connexions aboutissant à ces ports d'entrée sont de même nature. Selon l'exemple de la Fig. 1, les ports d'entrée BIF₁ et BIF₂ étant prévus pour que des connexions Ethernet BC₁ et BC₂ soient établies, ces ports d'entrée peuvent donc être reliés à la même interface réseau, en l'occurrence l'interface réseau IE₁.

La passerelle domestique RG1 comporte également des ports de sortie Sq (q=1,...,Q) auxquels sont connectés des équipements domestiques Tᵣ (r=1,...R) au travers d'une connexion soit filaire (Ethernet, USB, IEEE1394, etc.), soit sans fil (WiFi, Bluetooth, etc.). Un équipement domestique Tᵣ est, de manière non limitative, un ordinateur de bureau, un téléphone ou une passerelle de gestion de flux vidéo plus connue sous l'anglicisme Set Top Box. Chaque port de sortie Sq est relié à une interface de sortie ISₚ (p=1,...,P) et chaque interface de sortie est reliée à au moins un point de terminaison EPₜ (t=1,...,T).

Un tunnel TU(t,r) est établi entre chaque équipement domestique Tᵣ et un point de terminaison EPₜ afin qu'un service SERVₛ soit acheminé du point de terminaison EPₜ jusqu'à l'équipement domestique Tᵣ. Par exemple un tunnel PPP (Point to Point Protocol) est créé entre l'équipement domestique Tᵣ et le point de terminaison EPₜ à l'aide, dans le cas d'un tunnel PPP, du protocole Point-à-Point (Point-to-Point Protocol) défini par la demande de commentaires RFC 1661. Le but est de créer une liaison point-à-point (tunnel PPP) qui encapsule par exemple des trames Ethernet afin notamment de rendre plus confidentielles les données acheminées par ces trames. Un tunnel est maintenu de manière permanente, évitant ainsi à l'équipement domestique Tr de créer à nouveau un tunnel PPP lors d'un prochain accès au même service SERVₛ. On peut noter qu'un même équipement domestique Tr peut créer plusieurs tunnels TU(t,r), par exemple un premier tunnel TU(t=1,r=1) pour accéder à un premier service SERV₁ et un deuxième tunnel TU(2,1) pour accéder à un deuxième service SERV₂. De plus, plusieurs tunnels TU(t,r), TU(t,r+1),... peuvent être établis entre des équipements domestiques Tᵣ, Tᵣ₊₁,... et un même point de terminaison EPₜ.

De plus, la passerelle domestique RG1 comporte un module N de définition de liaisons internes comportant en outre des sorties dites points internes PIᵤ (u=1,...U). La matérialisation des points internes PIᵤ n'est pas toujours nécessaire et les points internes PIᵤ, les points de terminaison EPₜ et les interfaces de sortie ISₚ sont souvent confondus dans l'état de la technique. En d'autres termes, lorsqu'un point interne PIᵤ est associé à une seule et unique interface de sortie ISₚ et vice versa, en pratique, on ne matérialise généralement pas le point interne PIᵤ. Toutefois, conceptuellement la notion de point interne est valide et peut-être matérialisée, par exemple dans le cas où la passerelle domestique RG1 utilise le système d'exploitation Linux, par des *character devices.* Un *character device* est un fichier spécial dans lequel on peut lire et écrire caractère par caractère. Les caractères écrits sur ce fichier peuvent être traités par un module du noyau Linux. Ce qu'il advient de ces caractères dépend des fonctionnalités associées au module du noyau propriétaire dudit *character device.* On retrouve généralement ces fichiers spéciaux dans l'arborescence de fichier Linux dans le répertoire /*dev*/. Ces *character devices* sont notamment très utilisés pour écrire et lire sur les interfaces séries d'un équipement (/*dev*/*ttyS0*). Un tel fichier est créé avec la commande *mknod.* Le *Text Terminal HOWTO* v1.28 de Janvier 2002 présente dans sa section 6 les *character devices.* Ils sont notamment utilisés dans le cas du driver ISDN. Lorsque des données sont écrites sur un de ces *character devices,* elles sont automatiquement recopiée sur le point de terminaison EPt correspondant. De même, toutes les données reçues par les point de terminaison EPt peuvent être lues sur les *character devices* correspondant. Le module N est donc, dans ce cas, un programme susceptible de lire et écrire sur ces *character devices.*

En regard avec la Fig. 1, chaque point interne PIᵤ est associé à un point de terminaison EPₜ de manière à ce qu'un service SERVₛ accessible à partir d'une interface réseau IEₒ soit acheminé jusqu'à un point de terminaison EPₜ et donc jusqu'à un équipement domestique Tᵣ via un tunnel TU(t,r).

Une liaison interne L(o,u) est définie entre une interface réseau IEₒ et un point interne PIᵤ ou un point de terminaison EPₜ, étant donné qu'à chaque point de terminaison EPₜ correspond à un seul point interne PIᵤ. Ceci n'exclu pas le fait que plusieurs interfaces réseau peuvent être liées à un même point interne PIᵤ et que plusieurs points internes peuvent être reliés à une même interface réseau.

Généralement, le module de définition de liaisons internes N est un routeur NAT (Nework Adress Translation : traduction d'adresse réseau). Un routeur NAT établit à la demande et gère chaque liaison interne. De plus, dans le cas où le réseau NET1 est un réseau de type IP, un routeur NAT permet de cacher les adresses, par exemple l'adresse IP (Internet Protocol), des équipements domestiques Tᵣ à un équipement réseau relié à la passerelle domestique RG1 par l'intermédiaire du réseau de communication NET1. Un routeur NAT a donc pour responsabilité de traduire les adresses privées (des équipements domestiques Tr) en une adresse publique (celle de la passerelle domestique RG1 vue par l'équipement réseau) et réciproquement.

Afin d'acheminer les services fournis par un opérateur vers les équipements domestiques Tᵣ, la passerelle domestique RG1 est en charge d'établir et de gérer à la fois les connexions avec le réseau de communication NET1 et les liaisons internes L(o,u). Pour cela, chaque fournisseur d'accès établit une politique d'administration et de diffusion des services qu'il offre à chacun de ses abonnés.

La politique d'administration des services consiste à définir le type de connexion BCₘ qui achemine chacun de ces services et donc à définir vers quelle interface réseau IEₒ est acheminé chaque service.

La politique de diffusion des services consiste à définir pour chaque service SERVₛ au moins un port de sortie S_{q} sur lequel un abonné connecte un équipement domestique Tᵣ prévu pour présenter le service SERVₛ. La politique de diffusion des services consiste donc à déterminer, d'une part, les liaisons internes L(o,u) entre la ou les interfaces réseau IEₒ à partir de laquelle le service SERVs est accessible et un ou plusieurs points internes PIᵤ et, d'autre part, un ou plusieurs ports de sortie Sq prévus pour présenter le service SERVₛ.

Les politiques d'administration et de diffusion étant déterminées lors de la conception de la passerelle domestique RG1, les liaisons internes L(o,u) sont pré-cablées lors de la fabrication de la passerelle et les ports de sortie sont dédiés à un ou plusieurs services. Les liaisons internes L(o,u) sont bien évidemment inactives jusqu'à ce qu'un usager s'abonne à un service auprès de l'opérateur qui active alors la ou les liaisons internes L(o,u) correspondantes à ce service.

Les passerelles domestiques de l'état de la technique telles que celle qui est décrite à la Fig. 1 ne sont pas génériques, c'est-à-dire qu'elles contraignent un abonné à utiliser un port de sortie spécifié par l'opérateur pour recevoir un service. En d'autres termes, elles contraignent l'abonné à utiliser une connexion particulière entre son équipement domestique prévu pour présenter ce service et la passerelle domestique.

De plus, les passerelles domestiques ne sont pas évolutives, c'est-à-dire que la définition des liaisons internes L(o,u) et des ports de sortie Sq est irrémédiable, rendant ainsi toute évolution de la politique de diffusion des services impossible à moins de changer de passerelle domestique.

Le but de la présente invention est donc de résoudre le problème soulevé ci-dessus de manière à rendre plus évolutives et plus génériques les passerelles domestiques.

Pour ce faire, la présente invention prévoit un procédé de configuration de liaisons internes d'une passerelle domestique destinées à acheminer des services accessibles depuis au moins une interface réseau de ladite passerelle domestique jusqu'à au moins un point interne de ladite passerelle domestique, chacune desdites interfaces réseau étant reliée à un réseau de communication par l'intermédiaire d'au moins un port d'entrée de ladite passerelle, au moins un équipement domestique étant connecté à un port de sortie de ladite passerelle, ledit procédé étant caractérisé en ce qu'il comporte, suite à une demande d'accès de la part de l'un desdits équipements domestiques à l'un desdits services acheminés :
- une étape d'établissement d'une connexion entre ledit équipement domestique et un desdits points internes,
- une étape d'obtention d'une donnée de configuration relative audit service demandé, et
- une étape de configuration d'une liaison interne définie, à partir de ladite donnée de configuration ainsi obtenue, entre au moins une desdites interfaces réseau et ledit point interne de ladite connexion ainsi établie.

Selon un mode de réalisation de la présente invention, ladite donnée de configuration définissant une relation bijective entre un point d'accès et un service demandé, ladite liaison interne est définie entre une desdites interfaces réseau associée avec le point d'accès défini par ladite relation de ladite donnée de configuration et ledit point interne de ladite connexion ainsi établie.

Selon un mode de réalisation de la présente invention, ladite donnée de configuration définissant une relation entre un point d'accès et au moins une desdites interfaces réseau, ladite liaison interne est définie entre la ou une des interfaces réseau et le point d'accès définis par ladite relation de ladite donnée de configuration, ledit point d'accès étant associé au point interne de ladite connexion ainsi établie.

Selon un mode de réalisation de la présente invention, ladite donnée de configuration définissant une première relation bijective entre un point d'accès et un service demandé et une deuxième relation entre ledit point d'accès et au moins une desdites interfaces réseau, ladite liaison interne est définie entre la ou une des interfaces réseau et ledit point d'accès définis par les relations de ladite donnée de configuration, ledit point d'accès étant associé au point interne de ladite connexion ainsi établie.

Selon un mode de réalisation de la présente invention, ladite connexion établie entre ledit équipement domestique et ledit point interne est un tunnel PPP.

Selon un mode de réalisation de la présente invention, ladite donnée de configuration est obtenue à partir d'une mémoire ou d'une base de données de ladite passerelle.

La présente invention prévoit également une passerelle domestique destinée à acheminer des services d'un réseau de communication depuis une interface réseau de ladite passerelle domestique jusqu'à au moins un équipement domestique au travers de liaisons internes, chacune desdites liaisons internes étant destinée à acheminer un service entre l'une desdites interfaces réseau à partir de laquelle un service est accessible et un point interne auquel est relié un desdits équipements domestiques via une interface de sortie de ladite passerelle, caractérisée en ce qu'elle comporte :
- des moyens pour recevoir une demande d'accès à l'un desdits services acheminés de la part de l'un desdits équipements domestiques,
- des moyens pour établir une connexion entre ledit équipement domestique et un desdits points internes,
- des moyens pour obtenir une donnée de configuration relative à un service demandé,
- des moyens pour configurer une liaison interne définie à partir de ladite donnée de configuration entre au moins une desdites interfaces réseau et ledit point interne de ladite connexion ainsi établie.

Selon un mode de réalisation de la présente invention, ladite donnée de configuration définissant une relation bijective entre un point d'accès et un service demandé, ladite passerelle domestique comporte des moyens pour définir une liaison interne entre une desdites interfaces réseau associée avec le point d'accès défini par ladite relation de ladite donnée de configuration et ledit point interne de la connexion ainsi établie.

Selon un mode de réalisation de la présente invention, ladite donnée de configuration définissant une relation entre un point d'accès et au moins l'une desdites interfaces réseau, ladite passerelle domestique comporte des moyens pour définir une liaison interne entre la ou une des interface réseau et le point d'accès définis par ladite relation de ladite donnée de configuration, ledit point d'accès étant associé au point interne de ladite connexion ainsi établie.

Selon un mode de réalisation de la présente invention, ladite donnée de configuration définissant une première relation bijective entre un point d'accès et un service demandé et une deuxième relation entre ledit point d'accès et au moins une desdites interfaces réseau, ladite passerelle domestique comporte des moyens pour définir une liaison interne entre la ou une des interfaces réseau et le point d'accès définis par les relations de ladite donnée de configuration, ledit point d'accès étant associé au point interne de ladite connexion ainsi établie.

Selon un mode de réalisation de la présente invention, ladite passerelle domestique comporte des moyens pour mémoriser une donnée de configuration de liaisons internes.

Selon un mode de réalisation de la présente invention, au moins un desdits ponts internes étant associé à un point de terminaison, ladite passerelle domestique comporte des moyens pour établir un tunnel PPP entre un point de terminaison et ledit équipement domestique.

Selon un mode de réalisation de la présente invention, ladite passerelle domestique comporte un bus reliant chacune desdites interfaces de sortie entre elles et chacun desdits points de terminaison à chacune desdites interfaces de sortie.

Selon un mode de réalisation de la présente invention, chacune desdites interfaces de sortie est également reliée directement à au moins un point interne, de manière à pouvoir accéder à au moins un service commun auxdits équipements domestiques connectés à ladite passerelle domestique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 représente un schéma synoptique d'un exemple d'architecture interne d'une passerelle domestique RG1 selon l'état de la technique.
La Fig. 2 représente un schéma synoptique d'un exemple d'architecture interne d'une passerelle domestique RG2 selon un mode de réalisation de la présente invention.
La Fig. 3 représente un schéma synoptique d'un exemple d'architecture interne d'une passerelle domestique RG3 selon un autre mode de réalisation de la présente invention.
La Fig. 4 représente un schéma synoptique d'un exemple d'architecture interne d'une passerelle domestique RG4 selon un autre mode de réalisation de la présente invention.
La Fig. 5 représente un schéma synoptique d'un exemple d'architecture interne d'une passerelle domestique RG5 selon un autre mode de réalisation de la présente invention.

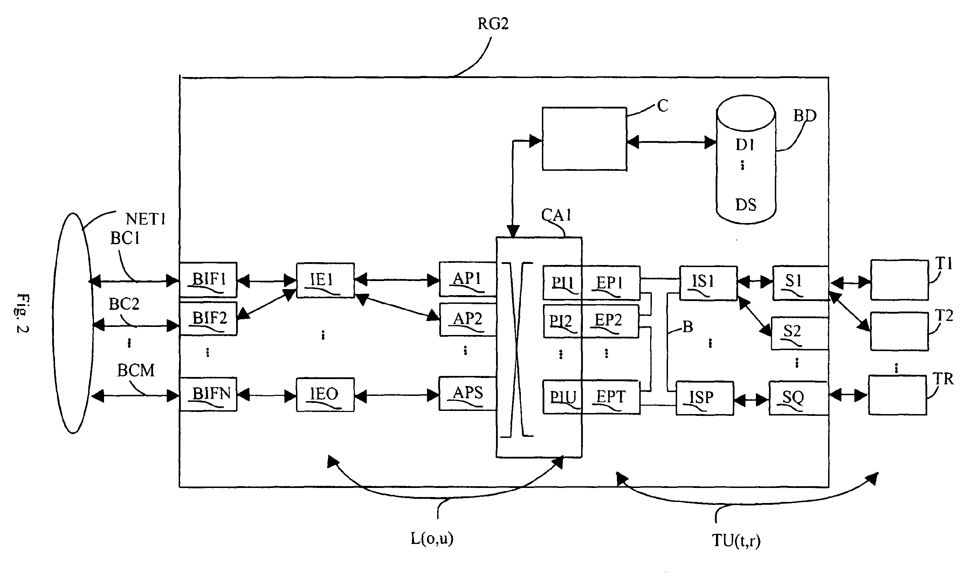

La Fig. 2 représente un schéma synoptique d'un exemple d'architecture interne d'une passerelle domestique RG2 selon un mode de réalisation de la présente invention. Les éléments de cette architecture, identiques à ceux de l'architecture de l'état de la technique décrite en relation avec la Fig. 1, portent les mêmes références.

L'architecture interne de la passerelle domestique RG2 se différencie de l'architecture RG1 de l'état de la technique en ce qu'elle comporte un bus B reliant les interfaces de sortie ISₚ aux points de terminaisons EPₜ, et en ce qu'elle comporte au moins un point d'accès APₛ (s=1,...S) relié à au moins une interface réseau IEₒ, et un module CA1 d'association entre point d'accès APₛ et point interne PIᵤ (u=1,...U) qui est, de manière non limitative, un programme d'ordinateur.

Le bus B est particulièrement avantageux car un même équipement domestique Tᵣ peut, au travers de plusieurs tunnels TU(t,r), accéder simultanément à plusieurs services SERVₛ et ce, indépendamment du port de sortie Sq auquel est relié l'équipement domestique Tᵣ.

Le module CA1 d'association entre point d'accès APₛ et point interne PIᵤ comporte des moyens pour associer un point d'accès APₛ à au moins un point interne PIᵤ associé à un point de terminaison EPₜ.

L'architecture interne de la passerelle domestique RG2 se différencie également de celle de l'état de la technique du fait qu'elle comporte un module C de configuration de liaisons internes et des moyens de mémorisation tels que par exemple une base de données BD.

Le module C de configuration de liaisons internes est relié, d'une part au module CA1 d'association entre point d'accès APₛ et point interne PIᵤ et, d'autre part, à la base de données BD.

La base de données BD mémorise des données, dites données de configuration de liaisons internes Dₛ (s=1,...,S). Les données de configuration de liaisons internes sont par exemple initialisées lors de la fabrication de la passerelle domestique RG2. De plus, elles peuvent être mise à jour, ou de nouvelles données de configuration peuvent être ajoutées à cette base de données lorsque de nouveaux services sont fournis par un opérateur ou un fournisseur de services. Par exemple, la mise à jour ou l'ajout de nouvelles données de configuration de liaisons internes sont réalisés au travers du réseau de communication NET1.

Selon un mode de réalisation de la présente invention, chaque donnée de configuration Dₛ définit une relation bijective entre un point d'accès APₛ et un service SERVₛ.

Ce mode de réalisation est particulièrement avantageux car il permet à un opérateur ou un fournisseur de services de modifier sa politique de diffusion des services en modifiant la relation bijective entre le service SERVₛ et le point d'accès APₛ par remplacement du point d'accès APₛ par un nouveau point d'accès APₛ₊₁. A ce moment-là, le module C de configuration de liaisons internes informe le module CA1 d'association entre point d'accès APₛ et point interne PIᵤ de la modification de la donnée de configuration Dₛ. Le module CA1 remplace alors la ou chaque association entre l'ancien point d'accès APₛ et le ou chaque point interne PIᵤ auquel il est associé par une nouvelle association entre le nouveau point d'accès APₛ₊₁ et le ou chaque point interne PIᵤ.

Le module de configuration de lien C comporte des moyens pour obtenir une donnée de configuration de liaisons internes Dₛ relative à un service SERVₛ à partir de la base de données BD, c'est-à-dire, selon ce mode de réalisation de l'architecture interne, des moyens pour indiquer au module CA1 le point d'accès APₛ au service SERVₛ.

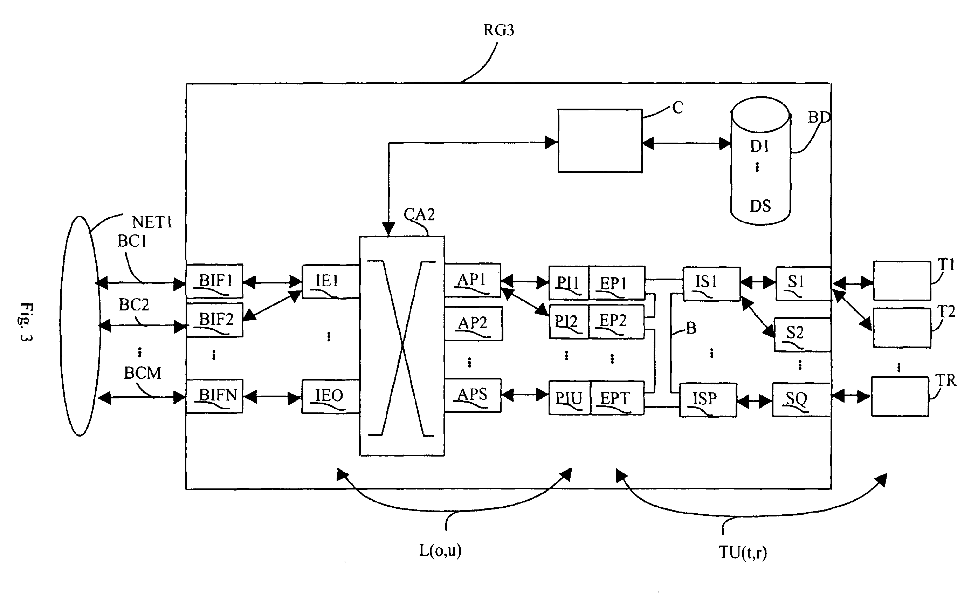

La Fig. 3 représente un schéma d'un exemple d'architecture interne d'une passerelle domestique RG3 selon un autre mode de réalisation de la présente invention. Les éléments de cette architecture, identiques à ceux de l'architecture RG2 qui est décrite en relation avec la Fig. 2, portent les mêmes références.

L'architecture interne de la passerelle domestique RG3 se différencie de l'architecture RG2 en ce que les associations établies par le module CA1 décrit en relation avec la Fig. 2 sont pré-cablées et ne sont donc par configurables à partir d'une donnée de configuration de liaisons internes Dₛ.

L'architecture interne de cette passerelle domestique RG2 se différencie également de l'architecture interne de la passerelle domestique RG2 de la Fig. 2 par le fait qu'elle comporte un module CA2 d'association entre interface réseau IEₒ et point d'accès APₛ. Ce module CA2 d'association entre interface réseau et point d'accès comporte des moyens pour associer une interface réseau IEₒ à partir de laquelle au moins un service SERVs est accessible à un point d'accès APₛ. Le module CA2 est relié au module C de configuration de liaisons internes.

Selon ce mode de réalisation de l'architecture interne, la base de données BD comporte des données de configuration de liaisons internes Dₛ définissant une relation entre au moins une interface réseau IEₒ et ledit point d'accès APₛ au service SERVs.

Le module de configuration de lien C comporte des moyens pour obtenir une donnée de configuration de liaisons internes Dₛ relative à un service SERVₛ de la base de données BD, c'est-à-dire, selon ce mode de réalisation de l'architecture interne des moyens pour indiquer au module CA2, d'une part le point d'accès APₛ au service SERVₛ et, d'autre part, la ou une des interfaces réseau IEₒ à partir de laquelle le service SERVₛ est accessible.

Ce mode de réalisation de l'architecture interne de la passerelle domestique est particulièrement avantageux car il permet à un opérateur de modifier sa politique de diffusion en modifiant la ou les relation(s) entre le point d'accès APₛ au service SERVₛ et la ou les interfaces réseau IEₒ par remplacement de la ou une des interfaces réseau IEₒ par une nouvelle interface réseau IEₒ₊₁.

Dans le cas où une donnée de configuration de liaisons internes Dₛ a été modifiée, le module C de configuration de liaisons internes informe le module CA2 d'association entre interface réseau IEₒ et points d'accès APₛ de la modification de la donnée de configuration Dₛ, le module CA2 remplaçant alors chaque association entre une ancienne interface réseau IEₒ et un point d'accès APₛ à un service SERVₛ par une nouvelle association entre la nouvelle interface réseau IEₒ₊₁ et le point d'accès APₛ.

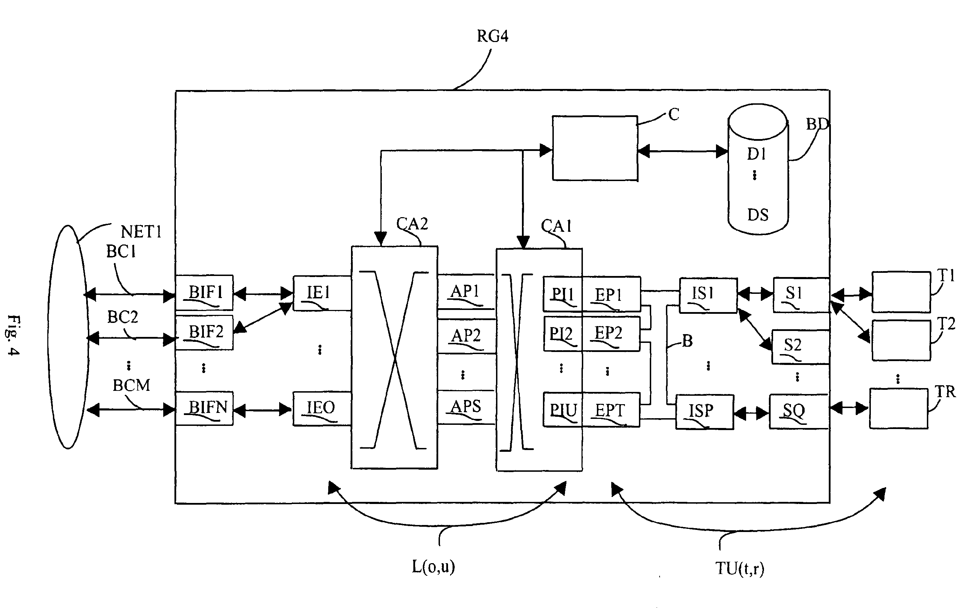

La Fig. 4 représente un schéma d'un exemple d'architecture interne d'une passerelle domestique RG4 selon un autre mode de réalisation de la présente invention. Les éléments de cette architecture identiques à ceux de l'architecture RG1 qui est décrite en relation avec la Fig. 1, portent les mêmes références.

L'architecture interne de cette passerelle domestique RG4 se différencie de l'architecture interne de la passerelle domestique RG1 de la Fig. 1 par le fait qu'elle comporte un bus B, un module CA1 d'association entre point d'accès APₛ et point interne PIᵤ, un module CA2 d'association entre interface réseau IEₒ et point d'accès APₛ, un module C de configuration de liaisons internes et une base de données BD décrits en relation avec les Fig. 2 et Fig. 3. Les modules CA1 et CA2 sont reliés au module C de configuration de liaisons internes, lui-même relié à la base de données BD.

Selon ce mode de réalisation de l'architecture interne, la base de données BD comporte des données de configuration de liaisons internes Dₛ qui définit d'une part, une relation bijective entre un point d'accès APₛ et un service SERVₛ et, d'autre part, une deuxième relation entre au moins une interface réseau IEₒ et le point d'accès APₛ au service SERVs.

Le module de configuration de lien C comporte des moyens pour obtenir une donnée de configuration de liaisons internes Dₛ relative à un service SERVₛ à partir de la base de données BD c'est-à-dire, selon ce mode de réalisation de l'architecture interne, des moyens pour indiquer d'une part aux modules CA1 et CA2 le point d'accès APₛ au service SERVₛ et, d'autre part, au module CA2 la ou les interfaces réseau IEₒ à partir de laquelle (desquelles) le service SERVₛ est accessible.

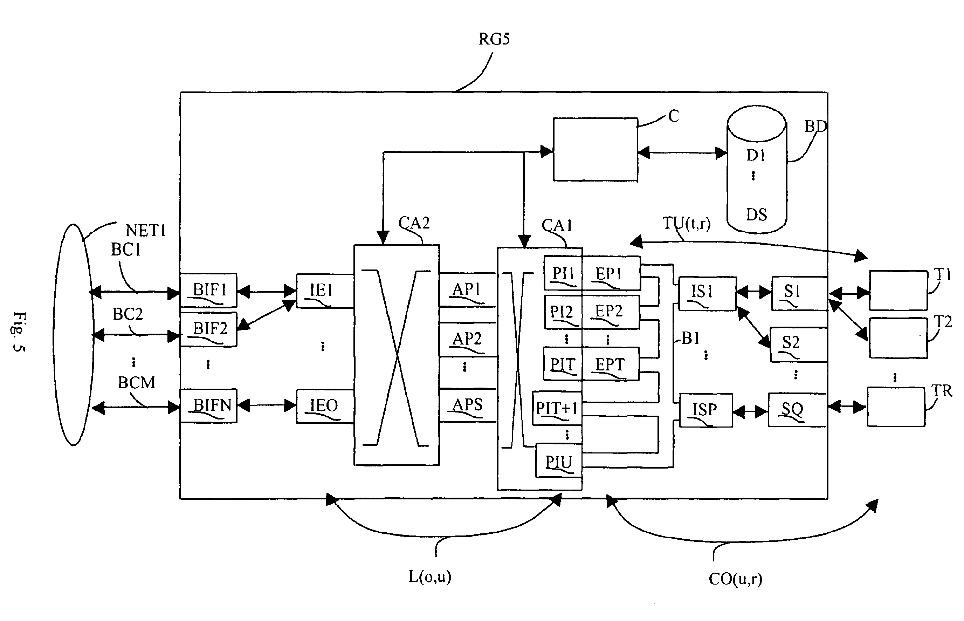

La Fig. 5 représente un schéma synoptique d'un exemple d'un autre mode de réalisation de l'architecture interne RG5 de la passerelle domestique selon la présente invention. Les éléments de cette architecture, identiques à ceux de l'architecture RG4 décrits en relation avec la Fig. 4, portent les mêmes références.

L'architecture interne de la passerelle domestique RG5 se différencie de l'architecture RG4 décrite en relation avec la Fig. 4 en ce qu'elle comporte un bus B1 qui relie d'une part, les interfaces de sortie ISₚ aux points internes PIᵤ (u=1,...,T) du module CA1 au travers de points de terminaisons EPₜ et, d'autre part, directement les interfaces de sortie ISₚ aux point internes PIᵤ (u=T+1,...,U), c'est-à-dire sans passer par un point de terminaison EPₜ.

L'architecture de la passerelle domestique RG5 est particulièrement avantageuse car elle permet à un équipement domestique Tᵣ d'accéder simultanément à plusieurs services et ce, indépendamment du port de sortie Sq auquel est connecté l'équipement domestique Tᵣ. Pour cela, chaque service accessible à partir d'un point de terminaison EPₜ est acheminé jusqu'à l'équipement domestique Tᵣ par un tunnel TU(t,r) et chaque service commun accessible à partir d'un point interne PIᵤ (u=T+1,...,U) est acheminé par une connexion CO(u,r). On peut remarquer que plusieurs équipements domestiques Tᵣ, Tᵣ₊₁,... sont susceptibles de créer des connexions CO(u,r),CO(u,r+1),... de manière à pouvoir accéder simultanément à un même service commun. Ce service commun est par exemple un service de gestion d'un réseau local constitué des équipements domestiques connectés à la passerelle domestique, service permettant à ces équipements de communiquer entre eux localement.

Selon la présente invention, le procédé de configuration de liaisons internes d'une passerelle domestique destinées à acheminer des services SERVₛ accessibles depuis au moins une interface réseau IEₒ de ladite passerelle domestique jusqu'à au moins un point interne PIᵤ de ladite passerelle domestique, débute suite à la réception d'une demande d'accès au service SERVₛ émise par un équipement domestique Tᵣ connecté à un des ports de sortie Sq de ladite passerelle domestique par une étape d'établissement d'une connexion TU(t,r) ou CO(u,r) entre l'équipement domestique Tᵣ et un desdits point interne PIᵤ.

L'étape d'établissement de ladite connexion est suivie d'une étape d'obtention d'une donnée de configuration Dₛ relative au service SERVₛ demandé.

L'étape d'obtention de la donnée de configuration Dₛ est suivie d'une étape de configuration d'une liaison interne L(o,u) à partir de ladite donnée de configuration Dₛ ainsi obtenue entre au moins une interface réseau IEₒ et ledit point interne Plᵤ de la connexion TU(t,r) ou CO(u,r) ainsi établie.

Selon un mode de réalisation de la présente invention, la donnée de configuration définit une relation bijective entre un point d'accès APₛ et le service SERVₛ demandé. Au cours de l'étape de configuration de la liaison interne L(o,u), ladite liaison interne L(o,u) est définie entre d'une part, une des interfaces réseau IEₒ à partir de laquelle le service demandé est accessible, l'interface réseau IEₒ étant associée au point d'accès APₛ défini par la relation bijective de la donnée de configuration Ds ainsi obtenue et, d'autre part, le point interne PIᵤ de la connexion TU(t,r) ou CO(u,r) établie au cours de l'étape d'établissement.

Selon un mode de réalisation de la présente invention, la donnée de configuration définit une relation entre un point d'accès APₛ et au moins une interface réseau IEₒ à partir de laquelle le service SERVₛ demandé est accessible. Au cours de l'étape de configuration de la liaison interne L(o,u), ladite liaison interne L(o,u) est alors définie entre la ou une des interfaces réseau IEₒ et le point d'accès APₛ définis à partir de ladite autre relation de la donnée de configuration Dₛ, le point d'accès APₛ étant associé au point interne PIᵤ de la connexion TU(t,r) ou CO(u,r) établie au cours de l'étape d'établissement.

Selon un mode de réalisation de la présente invention, la donnée de configuration définit une première relation bijective entre un point d'accès APₛ et le service SERVₛ demandé et une deuxième relation entre ledit point d'accès APₛ et au moins une interface réseau IEₒ à partir de laquelle le service SERVₛ demandé est accessible. Au cours de l'étape de configuration de la liaison interne L(o,u), ladite liaison interne L(o,u) est alors définie entre la ou une des interfaces réseau IEₒ et le point d'accès APₛ définis par la première et deuxième relations de ladite donnée de configuration Dₛ, ledit point d'accès étant associé au point interne PIᵤ de la connexion TU(t,r) ou CO(u,r) établie au cours de l'étape d'établissement.

Selon un mode de réalisation de la présente invention, la connexion Tu(t,r) est un tunnel PPP établi entre l'équipement domestique Tᵣ et ledit point interne PIᵤ.

Selon un mode de réalisation de la présente invention, la donnée de configuration Ds est obtenue à partir d'une base de données de ladite passerelle domestique.

## Revendications

1. Procédé de configuration de liaisons internes d'une passerelle domestique destinées à acheminer des services accessibles depuis au moins une interface réseau (IEₒ) de ladite passerelle domestique, qui correspond à une entrée d'un module de définition de liaisons internes (N) de ladite passerelle domestique, jusqu'à au moins une sortie dudit module de définition de liaisons internes, appelée point interne (PIᵤ), chacune desdites interfaces réseau (IEₒ) étant reliée à un réseau de communication (NET1) par l'intermédiaire d'au moins un port d'entrée (BIFₙ) de ladite passerelle, au moins un équipement domestique (Tᵣ) étant connecté à un port de sortie (S_{q}) de ladite passerelle, **caractérisé en ce que** ledit procédé comporte, suite à une demande d'accès de la part de l'un desdits équipements domestiques (Tᵣ) à l'un desdits services acheminés:
- une étape d'établissement d'un tunnel PPP (TU(t,r), CO(u,r)) dédié uniquement audit service entre ledit équipement domestique (Tᵣ) et un desdits points internes (PIᵤ),
- une étape d'obtention d'une donnée de configuration (Dₛ) relative audit service demandé, et
- une étape de configuration d'une liaison interne (L(o,u)) définie, à partir de ladite donnée de configuration (Dₛ) ainsi obtenue, entre au moins une desdites interfaces réseau (IEₒ) et le point interne (PIᵤ) du tunnel ainsi établi.

2. Procédé de configuration de liaisons internes d'une passerelle domestique selon la revendication 1, ladite donnée de configuration (Dₛ) définissant une relation bijective entre un point d'accès (APₛ) et un service demandé, **caractérisé en ce que** la liaison interne (L(o,u)) est définie entre une desdites interfaces réseau (IEₒ) associée avec le point d'accès (AP₅) défini par ladite relation de ladite donnée de configuration (D₅) et ledit point interne (PIᵤ) de ladite connexion ainsi établie.

3. Procédé de configuration de liaisons internes selon la revendication 1, ladite donnée de configuration (Dₛ) définissant une relation entre un point d'accès (APₛ) et au moins une desdites interfaces réseau (IEₒ), **caractérisé en ce que** ladite liaison interne (L(o,u)) est définie entre la ou une des interfaces réseau (IEₒ) et le point d'accès (APₛ) définis par ladite relation de ladite donnée de configuration (Dₛ), ledit point d'accès étant associé au point interne (PIᵤ) du tunnel établie.

4. Procédé de configuration de liaisons internes selon la revendication 1, ladite donnée de configuration (Dₛ) définissant une première relation bijective entre un point d'accès (APₛ) et un service demandé et une deuxième relation entre ledit point d'accès (APₛ) et au moins une desdites interfaces réseau (IEₒ), **caractérisé en ce que** ladite liaison interne (L(o,u)) est définie entre la ou une des interfaces réseau (IEₒ) et ledit point d'accès (APₛ) définis par les relations de ladite donnée de configuration (Dₛ), ledit point d'accès étant associé au point interne (PIᵤ) dudit tunnel ainsi établi.

5. Procédé de configuration de liaisons internes selon l'une des revendications précédentes, **caractérisé en ce que** ladite donnée de configuration (Dₛ) est obtenue à partir d'une mémoire ou d'une base de données de ladite passerelle.

6. Passerelle domestique destinée à acheminer des services d'un réseau de communication (NET1) depuis une interface réseau (IEₒ) de ladite passerelle domestique, qui correspond à une entrée d'un module de définition de liaisons internes (N) de ladite passerelle domestique, jusqu'à au moins un équipement domestique (Tᵣ) au travers de liaisons internes (L(o,u)), chacune desdites liaisons internes étant destinée à acheminer un service entre l'une desdites interfaces réseau (IEₒ) à partir de laquelle un service est accessible et une sortie dudit module de définition de liaisons internes, appelée point interne (PIᵤ) auquel est relié un desdits équipements domestiques (Tᵣ) via une interface de sortie (ISₚ) de ladite passerelle, **caractérisée en ce qu'**elle comporte :
- des moyens pour recevoir une demande d'accès à l'un desdits services acheminés de la part de l'un desdits équipements domestiques (Tᵣ),
- des moyens pour établir un tunnel PPP (TU(t,r) ou CO(u,r)) dédié uniquement audit service entre ledit équipement domestique (Tᵣ) et un desdits points internes (PIᵤ),
- des moyens pour obtenir une donnée de configuration (Ds) relative à un service demandé,
- des moyens pour configurer une liaison interne (L(o,u)) définie à partir de ladite donnée de configuration (Dₛ) entre au moins une desdites interfaces réseau (IEₒ) et ledit point interne (PIᵤ) du tunnel ainsi établi.

7. Passerelle domestique selon la revendication 6, ladite donnée de configuration (Dₛ) définissant une relation bijective entre un point d'accès (APₛ) et un service demandé, **caractérisée en ce qu'**elle comporte des moyens pour définir une liaison interne (L(o,u)) entre une desdites interfaces réseau (IEₒ) associée avec le point d'accès (APₛ) défini par ladite relation de ladite donnée de configuration (Dₛ) et ledit point interne (PIᵤ) du tunnel ainsi établi.

8. Passerelle domestique selon la revendication 6, ladite donnée de configuration (Dₛ) définissant une relation entre un point d'accès (APₛ) et au moins l'une desdites interfaces réseau (IEₒ), **caractérisée en ce qu'**elle comporte des moyens pour définir une liaison interne (L(o,u)) entre la ou une des interfaces réseau (IEₒ) et le point d'accès (APₛ) définis par ladite relation de ladite donnée de configuration (Dₛ), ledit point d'accès étant associé au point interne (PIᵤ) du tunnel ainsi établi.

9. Passerelle domestique selon la revendication 6, ladite donnée de configuration (Dₛ) définissant une première relation bijective entre un point d'accès (APₛ) et un service demandé et une deuxième relation entre ledit point d'accès (APₛ) et au moins une desdites interfaces réseau (IEₒ), **caractérisé en ce qu'**elle comporte des moyens pour définir une liaison interne (L(o,u)) entre la ou une des interfaces réseau (IEₒ) et le point d'accès (APₛ) définis par les relations de ladite donnée de configuration (Dₛ), ledit point d'accès étant associé au point interne (PIᵤ) du tunnel ainsi établi.

10. Passerelle domestique selon l'une des revendications 6 à 9, **caractérisée en ce qu'**elle comporte des moyens pour mémoriser une donnée de configuration de liaisons internes (Ds).

11. Passerelle domestique selon l'une des revendications 6 à 10, **caractérisée en ce qu'**elle comporte un bus (B) reliant chacune desdites interfaces de sortie (ISₚ) entre elles et chacun desdits points de terminaison (EP₁) à chacune desdites interfaces de sortie (ISₚ).

12. Passerelle domestique selon l'une des revendication 6 à 11, **caractérisée en ce que** chacune desdites interfaces de sortie (ISₚ) est également reliée directement à au moins un point interne (PIᵤ) de manière à pouvoir accéder à au moins un service commun auxdits équipements domestiques connectés à ladite passerelle domestique.

## Claims

1. Method of configuring internal links of a domestic gateway designed to route services accessible from at least one network interface (IEₒ) of said domestic gateway, which corresponds to an input of a module for defining internal links (N) of said domestic gateway, to at least one output of said module for defining internal links, known as an internal point (PIᵤ), each of said network interfaces (IEₒ) being connected to a communication network (NET1) via at least one input port (BIFₙ) of said gateway, at least one domestic apparatus (Tᵣ) being connected to an output port (S_{q}) of said gateway, **characterised in that** said method comprises, following a request for access on the part of one of said domestic apparatus (Tᵣ) to one of said routed services:
- a step of producing a tunnel PPP (TU(t,r), CO(u,r)) dedicated exclusively to said service between said domestic apparatus (Tᵣ) and one of said internal points (PIᵤ),
- a step of obtaining configuration data (Dₛ) relating to said requested service, and
- a step of configuring an internal link (L(o,u)) defined, starting from said configuration data (Dₛ) thus obtained, between at least one of said network interfaces (IEₒ) and the internal point (PIᵤ) of the tunnel thus produced.

2. Method of configuring internal links of a domestic gateway according to claim 1, said configuration data (Dₛ) defining a bijective relation between an access point (APₛ) and a requested service, **characterised in that** the internal link (L(o,u)) is defined between one of said network interfaces (IEₒ) associated with the access point (APₛ) defined by said relation of said configuration data (Dₛ) and said internal point (PIᵤ) of said connection thus established.

3. Method of configuring internal links according to claim 1, said configuration data (Dₛ) defining a relation between an access point (APₛ) and at least one of said network interfaces (IEₒ), **characterised in that** said internal link (L(o,u)) is defined between the or one of the network interfaces (IEₒ) and the access point (APₛ) defined by said relation of said configuration data (Dₛ), said access point being associated with the internal point (PIᵤ) of the tunnel formed.

4. Method of configuring internal links according to claim 1, said configuration data (Dₛ) defining a first bijective relation between an access point (APₛ) and a requested service and a second relation between said access point (APₛ) and at least one of said network interfaces (IEₒ), **characterised in that** said internal link (L(o,u)) is defined between the or one of the network interfaces (IEₒ) and said access point (APₛ) defined by the relations of said configuration data (Dₛ), said access point being associated with the internal point (PIᵤ) of the tunnel thus formed.

5. Method of configuring internal links according to one of the preceding claims, **characterised in that** said configuration data (Dₛ) is obtained from a memory or a database of said gateway.

6. Domestic gateway designed to route services of a communication network (NET1) from a network interface (IEₒ) of said domestic gateway, which corresponds to an input of a module for defining internal links (N) of said domestic gateway, to at least one domestic apparatus (Tᵣ) via internal links (L(o,u)), each of said internal links being intended for routing a service between one of said network interfaces (IEₒ) from which a service is accessible and an output of said module for defining internal links, known as an internal point (PIᵤ), to which one of said domestic apparatus (Tᵣ) is connected via an output interface (ISₚ) of said gateway,
**characterised in that** it comprises:
- means for receiving a request for access to one of said routed services on the part of one of said domestic apparatus (Tᵣ),
- means for producing a tunnel PPP (TU(t,r), CO(u,r)) dedicated exclusively to said service between said domestic apparatus (Tᵣ) and one of said internal points (PIᵤ),
- means for obtaining configuration data (Ds) relating to a requested service,
- means for configuring an internal link (L(o,u)) defined, starting from said configuration data (Dₛ), between at least one of said network interfaces (IEₒ) and said internal point (PIᵤ) of the tunnel thus produced.

7. Domestic gateway according to claim 6, said configuration data (Dₛ) defining a bijective relation between an access point (APₛ) and a requested service,
**characterised in that** it comprises means for defining an internal link (L(o,u)) between one of said network interfaces (IEₒ) associated with the access point (APₛ) defined by said relation of said configuration data (Dₛ) and said internal point (PIᵤ) of the tunnel thus formed.

8. Domestic gateway according to claim 6, said configuration data (Dₛ) defining a relation between an access point (APₛ) and at least one of said network interfaces (IEₒ), **characterised in that** it comprises means for defining an internal link (L(o,u)) between the or one of the network interfaces (IEₒ) and the access point (APₛ) defined by said relation of said configuration data (Dₛ), said access point being associated with the internal point (PIᵤ) of the tunnel thus formed.

9. Domestic gateway according to claim 6, said configuration data (Dₛ) defining a first bijective relation between an access point (APₛ) and a requested service and a second relation between said access point (APₛ) and at least one of said network interfaces (IEₒ), **characterised in that** it comprises means for defining an internal link (L(o,u)) between the or one of the network interfaces (IEₒ) and the access point (APₛ) defined by the relations of said configuration data (Dₛ), said access point being associated with the internal point (PIᵤ) of the tunnel thus formed.

10. Domestic gateway according to one of claims 6 to 9, **characterised in that** it comprises means for storing configuration data of internal links (Ds).

11. Domestic gateway according to one of claims 6 to 10, **characterised in that** it comprises a bus (B) connecting each of said output interfaces (ISₚ) to one another and each of said termination points (EP₁) to each of said output interfaces (ISₚ).

12. Domestic gateway according to one of claims 6 to 11, **characterised in that** each of said output interfaces (ISₚ) is also connected directly to at least one internal point (PIᵤ) so as to enable access to at least one service common to the said domestic apparatus connected to said domestic gateway.

## Patentansprüche

1. Verfahren zum Konfigurieren interner Verbindungen eines Heimnetzwerk-Gateways, die dazu bestimmt sind, Dienste, auf die zugegriffen werden kann, ausgehend von mindestens einer Netzwerksschnittstelle (IE₀) des Heimnetzwerk-Gateways, die einem Eingang eines Moduls zur Definition interner Verbindungen (N) des Heimnetzwerk-Gateways entspricht, bis zu mindestens einem Ausgang des Moduls zur Definition interner Verbindungen, der interner Punkt (PIᵤ) genannt wird, zu vermitteln, wobei jede der Netzwerksschnittstellen (IE₀) über mindestens einen Eingangsport (BlFₙ) des Netzwerk-Gateways mit einem Kommunikationsnetzwerk (NET1) verbunden wird, wobei mindestens ein Heimgerät (Tᵣ) an einen Ausgangsport (S_{q}) des Netzwerk-Gateways angeschlossen wird, **dadurch gekennzeichnet, dass** das Verfahren nach einer Anforderung des Zugriffs auf einen der vermittelten Dienste durch eines der Heimgeräte (Tᵣ) Folgendes umfasst:
- einen Schritt zum Einrichten eines PPP-Tunnels (TU(t,r), CO(u,r)), der einzig dem Dienst gewidmet ist, zwischen dem Heimgerät (Tᵣ) und einem der internen Punkte (PI_{U}),
- einen Schritt zum Erhalten eines Konfigurierungsdatenelements (Dₛ), das den angeforderten Dienst betrifft, und
- einen Schritt zum Konfigurieren einer internen Verbindung (L(o,u)), die ausgehend von dem so erhaltenen Konfigurierungsdatenelement (Dₛ) zwischen mindestens einer der Netzwerksschnittstellen (IE₀) und dem internen Punkt (PI_{U}) des so eingerichteten Tunnels definiert wird.

2. Verfahren zum Konfigurieren interner Verbindungen eines Heimnetzwerk-Gateways nach Anspruch 1, wobei das Konfigurierungsdatenelement (Dₛ) eine bijektive Beziehung zwischen einem Zugriffspunkt (APₛ) und einem angeforderten Dienst definiert, **dadurch gekennzeichnet, dass** die interne Verbindung (L(o,u)) zwischen einer der Netzwerksschnittstellen (IE₀), die mit dem Zugriffspunkt (APₛ) verknüpft wird, der durch die Beziehung des Konfigurierungsdatenelements (Dₛ) definiert wird, und dem internen Punkt (PIᵤ) der so eingerichteten Verbindung definiert wird.

3. Verfahren zum Konfigurieren interner Verbindungen nach Anspruch 1, wobei das Konfigurierungsdatenelement (Dₛ) eine Beziehung zwischen einem Zugriffspunkt (APₛ) und mindestens einer der Netzwerksschnittstellen (IE₀) definiert, **dadurch gekennzeichnet, dass** die interne Verbindung (L(o,u)) zwischen der oder einer der Netzwerksschnittstellen (IE₀) und dem Zugriffspunkt (APₛ) definiert wird, die durch die Beziehung des Konfigurierungsdatenelements (Dₛ) definiert werden, wobei der Zugriffspunkt mit dem internen Punkt (PIᵤ) des eingerichteten Tunnels verknüpft wird.

4. Verfahren zum Konfigurieren interner Verbindungen nach Anspruch 1, wobei das Konfigurierungsdatenelement (Dₛ) eine erste bijektive Beziehung zwischen einem Zugriffspunkt (APₛ) und einem angeforderten Dienst und eine zweite Beziehung zwischen dem Zugriffspunkt (APₛ) und mindestens einer der Netzwerksschnittstellen (IE₀) definiert, **dadurch gekennzeichnet, dass** die interne Verbindung (L(o,u)) zwischen der oder einer der Netzwerksschnittstellen (IE₀) und dem Zugriffspunkt (APₛ) definiert wird, die durch die Beziehungen des Konfigurierungsdatenelements (Dₛ) definiert werden, wobei der Zugriffspunkt mit dem internen Punkt (PIᵤ) des so eingerichteten Tunnels verknüpft wird.

5. Verfahren zum Konfigurieren interner Verbindungen nach einem der vorhergehenden Ansprüche, **dadurch gekennzeichnet, dass** das Konfigurierungsdatenelement (Dₛ) ausgehend von einem Speicher oder von einer Datenbank des Netzwerk-Gateways erhalten wird.

6. Heimnetzwerk-Gateway, das bestimmt ist zum Vermitteln von Diensten eines Kommunikationsnetzwerks (NET1) ausgehend von einer Netzwerksschnittstelle (IE₀) des Heimnetzwerk-Gateways, die einem Eingang eines Moduls zur Definition interner Verbindungen (N) des Heimnetzwerk-Gateways entspricht, über interne Verbindungen (L(o,u)) bis zu mindestens einem Heimgerät (Tᵣ), wobei jede der internen Verbindungen zum Vermitteln eines Dienstes zwischen einer der Netzwerksschnittstellen (IE₀), von der auf einen Dienst zugegriffen werden kann, und einem Ausgang des Moduls zur Definition interner Verbindungen bestimmt ist, der interner Punkt (PIᵤ) genannt wird, mit dem eines dieser Heimgeräte (Tᵣ) über eine Ausgangsschnittstelle (ISₚ) des Netzwerk-Gateways verbunden wird, **dadurch gekennzeichnet, dass** es Folgendes umfasst:
- Mittel zum Empfangen einer Anforderung zum Zugriff auf einen der vermittelten Dienste von einem der Heimgeräte (Tᵣ),
- Mittel zum Einrichten eines PPP-Tunnels (TU(t,r) oder CO(u,r)), der einzig dem Dienst gewidmet ist, zwischen dem Heimgerät (Tᵣ) und einem der internen Punkte (PI_{U}),
- Mittel zum Erhalten eines Konfigurierungsdatenelements (Dₛ), das den angeforderten Dienst betrifft,
- Mittel zum Konfigurieren einer internen Verbindung (L(o,u)), die ausgehend von dem Konfigurierungsdatenelement (Dₛ) zwischen mindestens einer der Netzwerksschnittstellen (IE₀) und dem internen Punkt (PIᵤ) des so eingerichteten Tunnels definiert wird.

7. Heimnetzwerk-Gateway nach Anspruch 6, wobei das Konfigurierungsdatenelement (Dₛ) eine bijektive Beziehung zwischen einem Zugriffspunkt (APₛ) und einem angeforderten Dienst definiert, **dadurch gekennzeichnet, dass** es Mittel zum Definieren einer internen Verbindung (L(o,u)) zwischen einer der Netzwerksschnittstellen (IE₀), die mit dem Zugriffspunkt (APₛ) verknüpft wird, der durch die Beziehung des Konfigurierungsdatenelements (Dₛ) definiert wird, und dem internen Punkt (PIᵤ) des so eingerichteten Tunnels umfasst.

8. Heimnetzwerk-Gateway nach Anspruch 6, wobei das Konfigurierungsdatenelement (D_{c}) eine Beziehung zwischen einem Zugriffspunkt (APₛ) und mindestens einer der Netzwerksschnittstellen (IE₀) definiert, **dadurch gekennzeichnet, dass** es Mittel zum Definieren einer internen Verbindung (L(o,u)) zwischen der oder einer der Netzwerksschnittstellen (IE₀) und dem Zugriffspunkt (APₛ) umfasst, die durch die Beziehung des Konfigurierungsdatenelements (D_{c}) definiert werden, wobei der Zugriffspunkt mit einem internen Punkt (PIᵤ) des so eingerichteten Tunnels verknüpft wird.

9. Heimnetzwerk-Gateway nach Anspruch 6, wobei das Konfigurierungsdatenelement (D_{c}) eine erste bijektive Beziehung zwischen einem Zugriffspunkt (APₛ) und einem angeforderten Dienst und eine zweite Beziehung zwischen dem Zugriffspunkt (APₛ) und mindestens einer der Netzwerksschnittstellen (IE₀) definiert, **dadurch gekennzeichnet, dass** es Mittel zum Definieren einer internen Verbindung (L(o,u)) zwischen der oder einer der Netzwerksschnittstellen (IE₀) und dem Zugriffspunkt (APₛ) umfasst, die durch die Beziehungen des Konfigurierungsdatenelements (D_{c}) definiert werden, wobei der Zugriffspunkt mit dem internen Punkt (PIᵤ) des so eingerichteten Tunnels verknüpft wird.

10. Heimnetzwerk-Gateway nach einem der Ansprüche 6 bis 9, **dadurch gekennzeichnet, dass** es Mittel zum Speichern eines Datenelements (Dₛ) zum Konfigurieren interner Verbindungen umfasst.

11. Heimnetzwerk-Gateway nach einem der Ansprüche 6 bis 10, **dadurch gekennzeichnet, dass** es einen Bus (B) umfasst, der jede der Ausgangsschnittstellen (ISₚ) miteinander und jeden der Endpunkte (EP₁) mit jeder der Ausgangsschnittstellen (ISₚ) verbindet.

12. Heimnetzwerk-Gateway nach einem der Ansprüche 6 bis 11, **dadurch gekennzeichnet, dass** jede der Ausgangsschnittstellen (ISₚ) auch direkt mit mindestens einem internen Punkt (PI_{U}) derart verbunden wird, dass auf mindestens einen Dienst zugegriffen werden kann, der den Heimgeräten gemein ist, die an das Heimnetzwerk-Gateway angeschlossen werden.
